# EUROPEAN PATENT APPLICATION

(11) **EP 2 398 133 A1**
(43) Date of publication of application: **21.12.2011**
(21) Application number: 10166185.8
(22) Date of filing: 16.06.2010
(51) Int. Cl.: H02M 1/32

(54) **Voltage converter**

(71) Applicant: NXP B.V., 5656 AG Eindhoven (NL)
(72) Inventor: Hanson, Harold, 5656 AE, Eindhoven (NL); Vemula, Madan, 5656 AE, Eindhoven (NL)
(74) Representative: Schouten, Marcus Maria

(57) **Abstract**

A dc-dc voltage converter in which the switches that control the energy transfer are controlled with a variable duty cycle which varies in dependence on the load driven by the converter. An overload detection is based on the duty cycle applied to the switches, and an overload protection circuit is actuated in response to overload detection.

## Description

The invention relates to a voltage converter for converting an input voltage to an output voltage.

The voltage generated by a power supply is often not at the required level for all circuits powered by the power supply, so a voltage to voltage conversion is needed. To minimise losses, this conversion (either up or down) is mostly done by means of a switched-mode DC/DC converter.

Switched-mode DC to DC converters convert one DC voltage level to another, by storing the input energy temporarily and then releasing that energy to the output at a different voltage. The storage may be in either magnetic field storage components (inductors, transformers) or electric field storage components (capacitors).

This conversion method is more power efficient (often 75% to 98%) than linear voltage regulation which dissipates unwanted power as heat, and this approach is therefore often used in battery operated devices, although such voltage conversion is often also used in conjunction with normal power supplies.

In magnetic DC to DC converters, energy is periodically stored into and released from a magnetic field in an inductor or a transformer, typically in the range from 300 kHz to 10 MHz. By adjusting the duty cycle of the charging voltage (that is, the ratio of on/off time), the amount of power transferred can be controlled. Usually, this is done to control the output voltage, though it could be done to control the input current, the output current, or maintain a constant power.

Switched capacitor converters rely on alternately connecting capacitors to the input and output in differing topologies. For example, a switched-capacitor reducing converter can charge two capacitors in series and then discharge them in parallel. This would produce an output voltage of half the input voltage, but at twice the current (minus various inefficiencies). Because they operate on discrete quantities of charge, these are also sometimes referred to as charge pump converters.

In order to protect DC to DC converters from high current damage, it is known to implement methods of measuring current. This can be done in several ways, such as:
- inserting a known resistance into the current path and measuring the voltage across the resistor;
- measuring the bias voltages on the high current transistors.

However, these methods have inherent problems. For example, inserting a resistor can limit the converter current output capability and lead to inefficiency, and it can be difficult to accurately measure bias voltages.

According to the invention, there is provided a dc-dc voltage converter comprising at least an input stage and an output stage, and switches for controlling the flow of energy between the input stage and the output stage thereby to implement a voltage conversion, wherein the switches are controlled with a variable duty cycle which varies in dependence on the load driven by the converter,
wherein the converter further comprises an overload detection circuit which detects the duty cycle applied to the switches, and an overload protection circuit which is actuated in response to the overload detection circuit output.

The invention is based on the recognition that the control signals for the switches which control the voltage conversion process can be used to determine the amount of current being sourced. In particular, the duty cycle of the control signal is dependent on the load. If the duty cycle becomes too large (or too small, depending on the logic used) then the current requirements have exceeded the design targets and the converter should be shut down to prevent damage to itself or other components in the system. Thus, the invention is based on monitoring of the duty cycle as representing the output current, and using this monitoring to protect the system.

The overload detection can for example comprise detecting that the duty cycle for controlling the switches is approaching zero or 100%.

The converter can comprise a capacitive converter. For example, the input stage can comprise a first capacitor and the output stage can comprise a second capacitor, and the switches are for controlling charge transfer between the first and second capacitors. The switches can then comprise a first switch arrangement for charging the first capacitor to an input voltage and a second switch arrangement for placing the first and second capacitors in series between the input and output, and wherein the first and second switch arrangements are controlled in dependence on the output voltage. The two switch arrangements are controlled in complementary manner, and therefore with a single control signal. The duty cycle of this single control signal then dictates the circuit operation and is dependent on the output load.

A timer arrangement can be provided for controlling the overload protection circuit to be operable for a fixed period and for subsequently operating the voltage converter for a test period to determine if the overload protection is still required. This timer arrangement can thus provide cyclic testing to determine if the need for the overload protection has passed.

A comparator can be provided for comparing the output voltage of the converter, or a voltage derived therefrom, with a reference voltage, wherein the output of the comparator controls the switches. The overload detection circuit then comprises the comparator output, for example having a circuit for determining the duty cycle of the comparator output signal.

The overload protection circuit can comprise a shunt switch between the input and output of the converter. This essentially shuts down the converter. The converter switches can be open when the shunt switch is closed.

The invention also provides a method of controlling a dc-dc voltage conversion, using a dc-dc converter which comprises at least an input stage and an output stage, and switches for controlling the flow of energy between the input stage and the output stage thereby to implement a voltage conversion, wherein the switches are controlled with a variable duty cycle which varies in dependence on the load driven by the converter,
wherein the method comprises detecting overload based on the duty cycle applied to the switches, and performing an overload protection in response to detected overload.

Preferred embodiments of the invention will now be described in a detailed description with reference to the accompanying drawing, in which:
Figure 1 shows a first example of voltage converter architecture of the invention;
Figure 2 is a first timing diagram to explain the operation of the circuit of Figure 1;
Figure 3 is a second timing diagram to explain the operation of the circuit of Figure 1;
Figure 4 shows a design of circuit for detecting over-current;
Figure 5 is a timing diagram to explain the operation of the circuit in response to a temporary overload event; and
Figure 6 is a timing diagram to explain the operation of the circuit in response to a more permanent overload event.

The invention provides a dc-dc voltage converter in which the switches that control the energy transfer are controlled with a variable duty cycle which varies in dependence on the load driven by the converter. An overload detection is based on the duty cycle applied to the switches, and an overload protection circuit is actuated in response to overload detection.

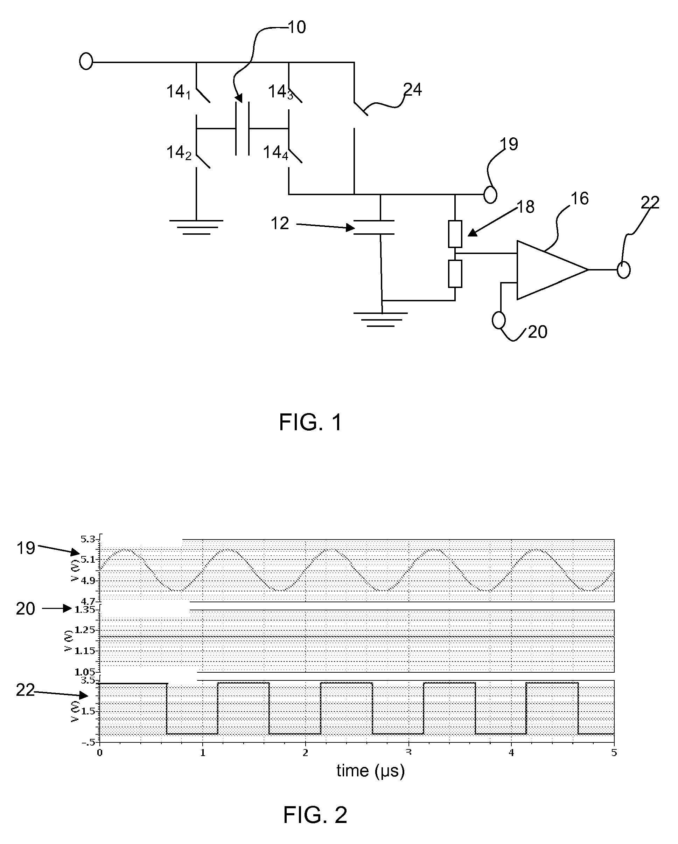

Figure 1 shows in schematic form one example of capacitive charge pump which has been modified in accordance with the invention.

The circuit is a capacitive voltage up-converter. The voltage conversion is achieved by transferring energy (in this example charge) between a charge pump capacitor 10 and an output capacitor 12, which can be an external capacitor.

The converter comprises four switches 14₁ to 14₄ for controlling the voltage conversion.

A first pair of switches 14₁ and 14₂ are in series between the input and ground. A second pair of switches 14₃ and 14₄ are in series between the input and the output. The charge pump capacitor 10 is connected between (i) the junction between the first pair of switches and (ii) the junction between the second pair of switches.

By way of example, the converter can be a voltage increaser, for example for increasing an input voltage of 3.3V to a desired output voltage of 5.0V.

The switches are operable in two modes/cycles.

In a first cycle, switches 14₃ and 14₂ are closed so that the charge pump capacitor 10 charges to the input voltage e.g. 3.3V. Switches 14₁ and 14₄ are open, so that the output voltage is that which was stored on the output capacitor 12. The charge on this output capacitor will discharge over time to the output load.

In a second cycle, switches 14₁ and 14₄ are closed to pull the output back up to 5V (3.3V on the high voltage rail and the charge pump capacitor charge shared between the two capacitors). If the two capacitors have the same value, then with the charge pump capacitor charged to 3.3V and with the output capacitor fully discharged, charge sharing will result in 5V at the output (3.3V at the input + 0.5x3.3V resulting from the charge sharing).

As mentioned above, in cycle 1, the output voltage drops as the output capacitor is discharged to the load. Similarly, the voltage rises in cycle 2 as the capacitor 12 is recharged through the capacitor 10,

The switches are controlled between the two cycles/modes, to keep the output voltage at the desired level. As will be apparent, the switches place the capacitors in series in cycle 2, and in cycle 1 the switches isolate one capacitor from the other, with the charge pump capacitor being charged to the input voltage.

For the feedback control loop, a comparator 16 and voltage divider 18 are provided. The voltage divider divides the output voltage and provides the result to one terminal of the comparator 16. The other terminal 20 is provided with a reference voltage. Thus, when the divided voltage passes the reference voltage, the comparator output 22 toggles. This toggling comparator output is used to control the switches. The hysteresis associated with the comparator will determine how far the divided voltage is allowed to fluctuate each side of the target reference voltage.

This circuit thus provides feedback control of the output voltage. The timing instants at which the comparator output toggles will depend on the speed of charging and discharging of the capacitor 12, which depends on the load. This load is connected to the output 19 and is not shown in Figure 1.

If there is no load, the output capacitor does not discharge (if the current flowing through the divider 18 is ignored). Thus, a duty cycle approaching 100% duty cycle is approached, with only cycle 1, because the output voltage does not drop and the output capacitor 12 does not need to be recharged.

If there is high load (such as a short circuit), the output capacitor discharges rapidly. A longer charging cycle for the output capacitor results. If the discharge of the load is too fast, the charge transfer rate from the charge pump capacitor 10 to the output capacitor 12 is not sufficient for the output voltage to reach its target value. As a result, the duty cycle becomes zero, with only cycle 2, and the circuit is unable to charge the output capacitor sufficiently.

Thus, the duty cycle depends on the output load.

Between these extremes, there is a duty cycle of 50%, with the charge pump just able to deliver the charge to the load and maintain the desired 5V output voltage.

Figure 2 shows the voltage waveforms at the output 19, the reference voltage 20 and the comparator output 22 when operating at 50% duty cycle. The output voltage is fluctuating between 4.8V and 5.2V, and this hysteresis is provided by the comparator design. Figure 2 shows the steady state oscillation and not the initial ramping up of the output voltage.

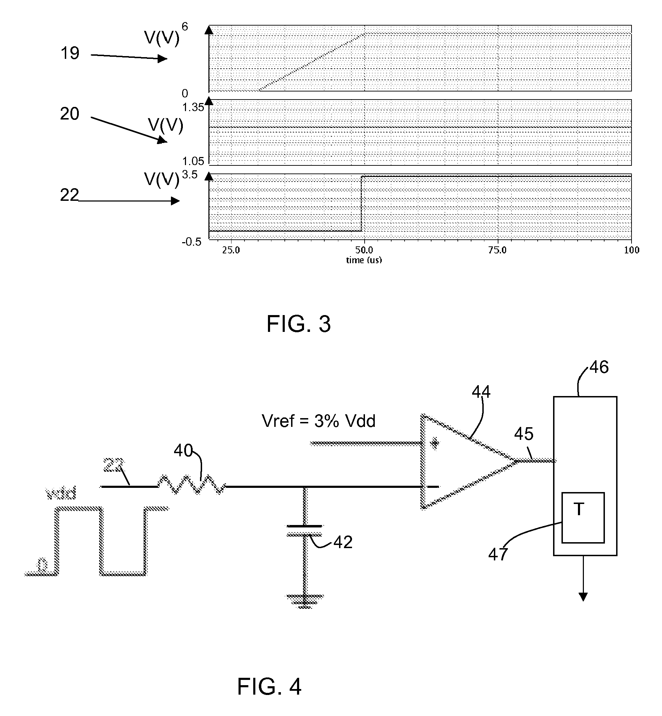

Figure 3 shows the 100% duty cycle for no load. The output voltage ramps up until the desired voltage is reached, and this remains held on the output capacitor 12 with no further switching needed.

The operation of the circuit as described above is conventional.

The invention is based on the recognition that the duty cycle approaching zero (or 100%, depending on the particular circuit design) is in an indication of overload of the voltage converter, such that the voltage converter is unable to deliver the output current, or the current drawn exceeds the design requirement. The invention is thus based on the use of the duty cycle as a control parameter for providing over current protection.

In order to implement the invention, the duty cycle of the signal at the comparator output 22 is measured.

Figure 4 shows a simple circuit which functions as the over current detector. The circuit comprises a low pass filter of a resistor 40 and capacitor 42, and a comparator 44. The comparator output 22 (from Figure 1) is feed through the low pass filter, and the filter output is the average of the comparator output. This is compared against a reference voltage which is for example 3% of the supply voltage Vdd (the supply voltage may for example be 3.3V +/- 10%). If the average is below this value, then the over current detector detects the over current event. The over current detection signal 45 is the output of the comparator 44.

Thus, if the comparator output 22 has a duty cycle approaching 0 (which in this circuit arrangement means that only cycle 2 as defined above is active and the circuit is unsuccessfully trying to charge the output to the desired voltage), then an overload event is deemed to be in place. In response to this, the switches 14 are disabled (all open) and a shunt switch 24 is closed. This shunt switch 24 is connected between the input and output, and thus connects the output to the input voltage.

The overload detection signal is fed to a digital module 46 which has a timer arrangement 47 for controlling the overload protection circuit to be operable for a fixed period, and for subsequently operating the voltage converter for a test period to determine if the overload protection is still required. This timer arrangement can thus provide cyclic testing to determine if the need for the overload protection has passed.

By way of example, the timer arrangement can have a 1 ms timer (the fixed time period for the overload protection) and a 200µs timer (the test period), and control logic.

The digital module starts the 1 ms timer and enables the shunt switch 24 and disables all the power switches during this time. The digital module then starts the 200 µs timer, after the 1 ms, and during this time the power switches are enabled and the shunt switch 24 is disabled.

During this time, if the load at the converter output 19 is within the design specification, then the output ramps up to 5V and the comparator output 22 goes high. Thus, the comparator output 22 being able to go high within the 200 µs is indicative that the overload event has ended, as it means that the output voltage has been able to reach the maximum threshold at which converter switching takes place.

In this way, the protection mode is activated for a predetermined time, such as 1 ms. The subsequent operation of the charge pump can then be operated for a fixed time period, such as 200µs. This fixed time period can depend on the circuit design, and can relate to the desired rate of ramping of the output voltage according to the design specification. During this time, it is determined if the charge pump is able to deliver the desired voltage under maximum load conditions for which the charge pump is designed. For example the design may specify that the charge pump can ramp up to 5V at maximum 75mA load current in less than 200µs.

Overload conditions could occur during power up and these conditions could be resolved as soon as the power supply is stable. Overload conditions could arise due to a defect on the board connected to the charge pump output, or for example if the change pump is being used in an incorrect application.

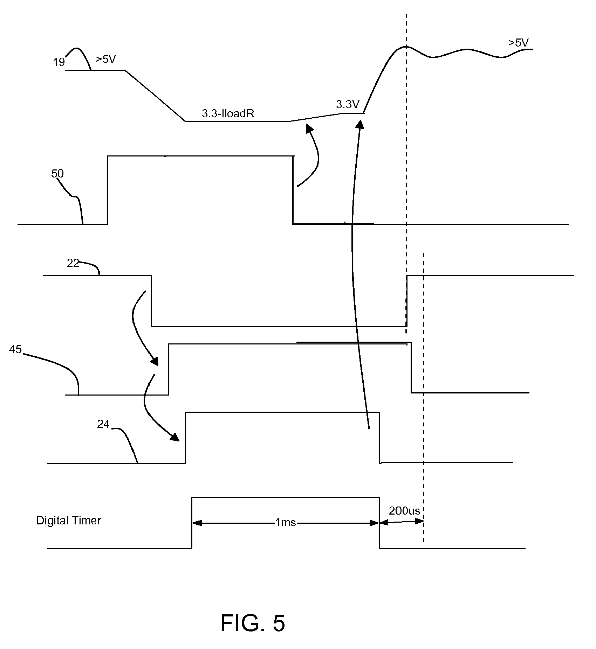

Figure 5 is used to explain the operation of the circuit when a high load condition is encountered, and which is removed over time. The plots show the output 19 of the voltage converter, the output load current 50, the output 22 of the comparator 16, and the over current detection signal 45.

The shunt switch operation is shown as 24 and the digital timer periods are also shown.

The high current load event (the rising step in plot 50) triggers a drop in the output voltage 19. The comparator output 22 detects this drop, and with a slight delay due to the filtering (and so that normal toggling of the output 22 as shown in Figure 2 is not detected), the over-current detection signal is generated, and the shunt switch is turned on.

During this time, the voltage at the output 19 is equal to (3.3 - I_{load}xR)V where I_{load} is the output current and R is the shunt switch resistance. Thus, I_{load}xR is the voltage drop across the shunt switch. As shown, after the high current load condition ends, the voltage at the output 19 ramps back to the input voltage of 3.3V - with negligible voltage drop across the shunt switch.

During the 1ms time period, the overload event ends. As a result, when the 200 µs period is applied, the output 19 is able to be recharged to the desired voltage, so that the comparator output 22 is able to be switched high, and the over-current protection mode ended.

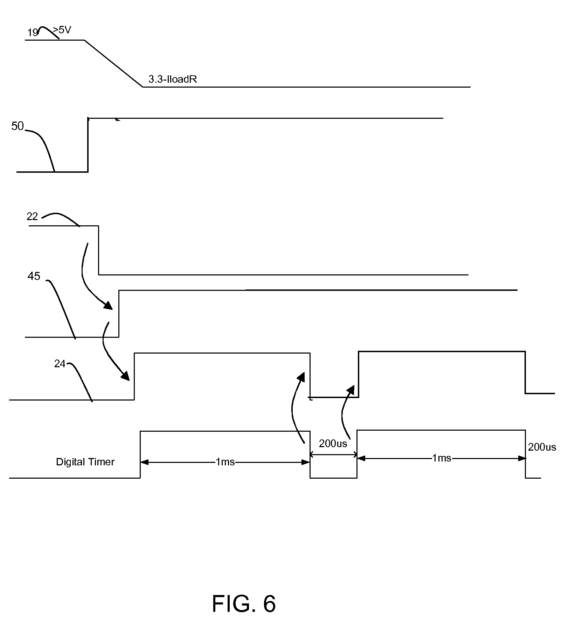

Figure 6 is used to explain the operation of the circuit when a high load condition is encountered, but which is not removed over time. The same plots are presented as in Figure 5. Again, the output voltage drops to 3.3V-I_{load}xR.

The high current load event again triggers a drop in the output voltage 19. The comparator output 22 detects this drop, and with the slight delay, the over-current detection signal is generated, and the shunt switch is turned on.

During the 1 ms time period, the overload event remains. As a result, when the 200 µs period is applied, the output 19 is not able to be recharged to the desired voltage, so that the comparator output 22 stays low, and the over-current protection mode remains in place. The 1ms and 200 µs cycle continues, until the overload event ends.

The invention has been described as applied to one design of charge pump circuit. The example circuit has only two stages (i.e. two capacitors between which charge is moved). However, the invention can be applied to multiple stage charge pumps. Similarly, it can be applied to voltage up-converters and voltage down-converters.

Essentially, the invention can be applied to any voltage converter in which the duty cycle applied to the switches which control the voltage conversion operation have a feedback control applied to them, so that they respond dynamically to the load on the output of the converter. In this way, the duty cycle is used as a measure of the output load.

The invention can be applied to inductive and well as capacitive converters. For example, the invention can be used in voltage mode inductive buck, boost or buck-boost converters and also in battery charger applications.

In the examples above, a duty cycle of 0 corresponds to one cycle being in place continuously and 100% corresponds to the other cycle being in place continuously. However, the polarity of signals can be reversed, so that a duty cycle of 0% can mean either that the charge pump charging cycle is in place or the output capacitor charging cycle is in place. Indeed, the comparator can be arranged with either of the two possible polarities, as long as the feedback loop eventually controls the switches in the required way. Similarly, overload may result in the comparator output approaching 0% or 100% depending how the circuit is arranged.

Various modifications will be apparent to those skilled in the art.

## Claims

1. A dc-dc voltage converter comprising at least an input stage and an output stage, and switches (14) for controlling the flow of energy between the input stage and the output stage thereby to implement a voltage conversion, wherein the switches (14) are controlled with a variable duty cycle which varies in dependence on the load driven by the converter,
wherein the converter further comprises an overload detection circuit (16,18) which detects the duty cycle applied to the switches (14), and an overload protection circuit (24) which is actuated in response to the overload detection circuit output.

2. A converter as claimed in claim 1, comprising a capacitive converter, wherein the input stage comprises a first capacitor (10) and the output stage comprises a second capacitor (12), and the switches (14) are for controlling charge transfer between the first and second capacitors.

3. A converter as claimed in claim 2, wherein the switches (14) comprise a first switch arrangement (14₂,14₃) for charging the first capacitor to an input voltage and a second switch arrangement (14₁,14₄) for placing the first and second capacitors (10,12) in series between the input and output, and wherein the first and second switch arrangements are controlled in dependence on the output voltage.

4. A converter as claimed in any preceding claim, comprising a timer arrangement (47) for controlling the overload protection circuit (24) to be operable for a fixed period and for subsequently operating the voltage converter for a test period to determine if the overload protection is still required.

5. A converter as claimed in any preceding claim, comprising a comparator (16) for comparing the output voltage of the converter, or a voltage derived therefrom, with a reference voltage, wherein the output (22) of the comparator (16) controls the switches.

6. A converter as claimed in claim 5, wherein the overload detection circuit comprises, as an input, the comparator output (22).

7. A converter as claimed in any preceding claim, wherein the overload protection circuit comprises a shunt switch (24) between the input and output of the converter.

8. A converter as claimed in claim 7, wherein the overload protection circuit comprises a controller for opening the converter switches when the shunt switch is closed.

9. A converter as claimed in any preceding claim, wherein the overload detection comprises detecting that the duty cycle for controlling the switches is approaching zero or 100%.

10. A method of controlling a dc-dc voltage conversion, using a dc-dc converter which comprises at least an input stage and an output stage, and switches (14) for controlling the flow of energy between the input stage and the output stage thereby to implement a voltage conversion, wherein the switches (14) are controlled with a variable duty cycle which varies in dependence on the load driven by the converter,
wherein the method comprises detecting overload based on the duty cycle applied to the switches (14), and performing an overload protection in response to detected overload.

11. A method as claimed in claim 10, wherein the voltage conversion comprises a capacitive dc-dc voltage conversion.

12. A method as claimed in claim 10 or 11, comprising comparing the output voltage (19) of the converter, or a voltage derived therefrom, with a reference voltage, and using the output (22) of the comparator to control the switches.

13. A method as claimed in claim 12, wherein the overload protection comprises coupling the input and output of the converter.

14. A method as claimed in claim 13, wherein the converter switches (14) are opened when the input and output are coupled.

15. A method as claimed in one of claims 10 to 14, wherein the detecting overload comprises detecting that the duty cycle for controlling the switches is approaching zero or 100%.
